# FASCICULE DE BREVET EUROPEEN

(11) **EP 2 723 591 B1**
(45) Date de publication et mention de la délivrance du brevet: **14.03.2018**
(21) Numéro de dépôt: 12731038.1
(22) Date de dépôt: 22.05.2012
(51) Int. Cl.: B60J 10/70, B62D 25/08

(54) **ENSEMBLE COMPRENANT UN JOINT FIXE SUR LE BORD INFERIEUR DU PARE-BRISE D'UN VEHICULE AUTOMOBILE ET UNE GRILLE D'AUVENT FIXEE SUR CE JOINT.**
ANORDNUNG MIT EINER AM UNTEREN RAND DER WINDSCHUTZSCHEIBE EINES KRAFTFAHRZEUGES BEFESTIGTEN DICHTUNG UND AN DIESER DICHTUNG BEFESTIGTEN LUKE
ASSEMBLY COMPRISING A SEAL FIXED TO THE LOWER EDGE OF THE WINDSCREEN OF A MOTOR VEHICLE AND A SCUTTLE FIXED TO THIS SEAL

(30) Priorité: 21.06.2011 FR 1155440
(43) Date de publication de la demande: 30.04.2014
(73) Titulaire: PSA Automobiles SA, 78300 Poissy (FR)
(72) Inventeur: GUIDEZ, Frederic, F-59400 Cambrai (FR)
(86) Numéro de dépôt international: PCT/FR2012/051141
(87) Numéro de publication internationale: WO 2012/175834

(56) Documents cités:
- DE-U1-202008 016 217
- JP-A- 9 193 720
- JP-A- 2008 018 848

## Description

La présente invention concerne un ensemble comprenant un joint fixé sur le bord inférieur du pare-brise d'un véhicule automobile et une grille d'auvent fixée sur ce joint.

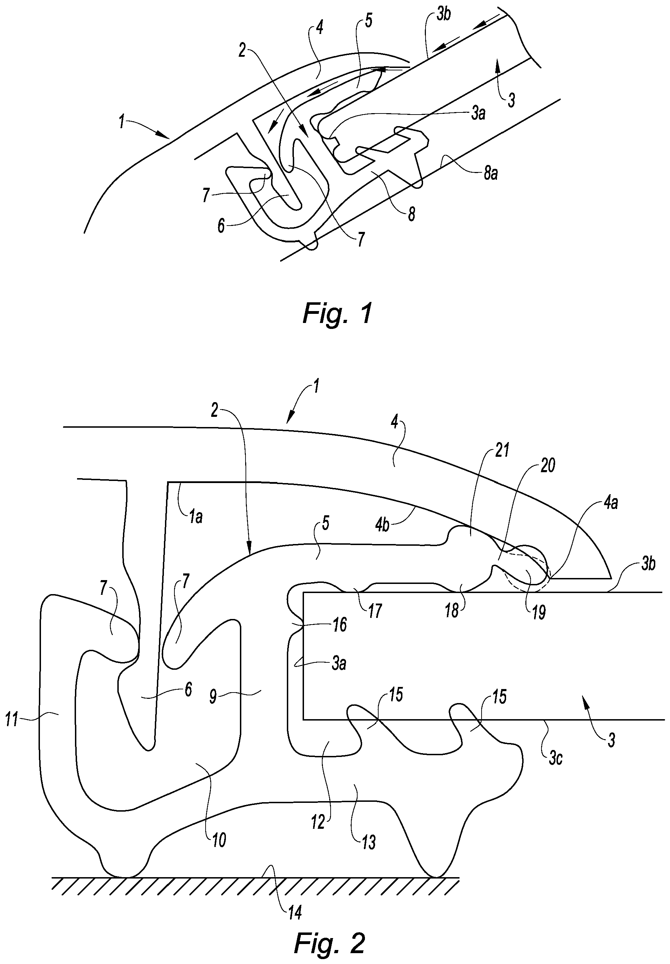

Un ensemble connu de ce type est représenté en coupe, suivant un plan vertical longitudinal d'un véhicule automobile, sur la figure 1.

Sur cette figure 1, la grille d'auvent 1 est fixée sur un joint 2 qui est chaussé sur le bord inférieur 3a d'un pare-brise 3 grâce à un harpon 6 qui est encliqueté entre deux lèvres 7.

La grille d'auvent 1 comporte une lèvre 4 qui recouvre une partie 5 du joint 2 s'étendant sur une partie de la face extérieure 3b du pare-brise 3.

La partie 8 du joint 2 est en contact avec une partie 8a de la caisse du véhicule.

Le plus souvent, la grille d'auvent 1 est réalisée avec deux matières plastiques différentes, de sorte que la partie comportant la lèvre 4 soit plus flexible que la partie constituant le reste de la grille d'auvent 1.

Ainsi, après fixation de la grille d'auvent 1 sur le joint 2, la lèvre 4 peut s'appuyer élastiquement sur la face extérieure 3b du pare-brise 3 et réaliser de ce fait une étanchéité qui empêche le passage des eaux de pluie ou de lavage entre la lèvre 4 et le joint 2.

Pour des raisons d'économie, on souhaite réaliser la grille d'auvent 1 en une seule matière plastique, bon marché, telle que le polypropylène.

Cependant, cette matière est relativement peu flexible, de sorte que compte tenu des dispersions de fabrication, on ne parvient pas à réaliser une étanchéité suffisante entre la lèvre 4 et le pare-brise 3.

Ainsi, les eaux de pluie ou de lavage peuvent s'écouler entre la lèvre 4 de la grille d'auvent 1 et la partie 5 du joint 2, comme montré sur les flèches représentées sur la figure 1.

Un tel ensemble comprenant un joint fixé sur le bord inférieur du pare-brise d'un véhicule automobile et une grille d'auvent fixée sur ce joint se retrouve dans le document DE 20 2008 016217.

Le but de la présente invention est de remédier à cet inconvénient.

Ce but est atteint, selon l'invention, grâce à un ensemble comprenant un joint fixé sur le bord inférieur du pare-brise d'un véhicule automobile et une grille d'auvent fixée sur ce joint, cette grille d'auvent comportant une lèvre recouvrant une partie du joint s'étendant sur le bord inférieur du pare-brise et une partie de la face extérieure du pare-brise, caractérisé en ce que l'extrémité de ladite partie du joint opposée au bord inférieur du pare-brise comporte une zone amincie flexible sur laquelle s'appuie l'extrémité de la lèvre de la grille d'auvent pour mettre ladite zone amincie flexible dudit joint en contact avec la face extérieure du pare-brise.

Ainsi, grâce au contact entre la zone amincie portée par l'extrémité du joint et le pare-brise, on réalise une étanchéité entre la lèvre, le joint et le pare-brise qui évite tout risque de passage des eaux de pluie ou de lavage.

Ainsi, l'ensemble de la grille d'auvent peut être moulé d'une seule pièce avec la même matière plastique, bon marché, telle que le polypropylène.

Dans une version préférée de l'invention, ladite zone amincie et flexible est reliée au reste dudit joint par un rétrécissement de la matière pour constituer une charnière.

Cette charnière permet à la zone amincie de pivoter entre une première position dans laquelle, avant fixation de la grille d'auvent sur ledit joint cette zone amincie est libre par rapport à la face extérieure du pare-brise afin de pouvoir chausser le joint sur le bord inférieur du pare-brise sans que la lèvre ne se replie sur elle-même et une seconde position dans laquelle, après fixation de la grille d'auvent sur ledit joint, une partie de l'extrémité de la zone amincie prend appui de façon étanche entre la face extérieure du pare-brise et la grille d'auvent.

De préférence également, la face extérieure de ladite partie du joint comporte à l'arrière de ladite zone amincie flexible une protubérance sur laquelle peut s'appuyer la face intérieure de ladite lèvre, lorsque ladite zone amincie est dans ladite seconde position.

Cet appui entre la protubérance du joint et la face intérieure de la lèvre de la grille d'auvent contribue à l'obtention d'une excellente étanchéité entre la lèvre et le joint.

Dans un mode de réalisation, le joint comporte une partie recouvrant le bord inférieur du pare-brise et comportant un évidement de section transversale sensiblement en U, les deux ailes de cet évidement comportant chacune une lèvre dirigée vers l'aile opposée et la grille d'auvent comporte sur sa face intérieure un harpon pouvant s'encliqueter entre les deux ailes du joint.

Dans une version de l'invention, le joint comporte un évidement de section transversale en U qui est chaussé sur le bord inférieur du pare-brise, l'aile de cet évidement s'étendant sur une partie de la face extérieure du pare-brise constituant ladite partie du joint comportant ladite zone amincie flexible.

Dans une autre version, le joint est collé au pare-brise.

Selon un autre aspect, l'invention concerne également un véhicule automobile équipé d'un ensemble joint inférieur de pare-brise et d'une grille d'auvent selon l'invention.

D'autres particularités et avantages de l'invention apparaîtront encore tout au long de la description ci-après.

Aux dessins annexés, donnés à titre d'exemples, non limitatifs :
- la figure 2 est une vue en coupe transversale d'un ensemble grille d'auvent et joint de pare-brise selon l'invention,
- la figure 3 est une vue analogue à la figure 2 et concerne un autre mode de réalisation de l'ensemble.

La figure 2 représente un ensemble comprenant un joint 2 en élastomère fixé sur le bord inférieur 3a du pare-brise 3 d'un véhicule automobile et une grille d'auvent 1 fixée sur ce joint 2.

La grille d'auvent 1 comporte une lèvre 4 recouvrant une partie 5 du joint 2 s'étendant sur le bord inférieur 3a du pare-brise 3 et une partie de la face extérieure 3b du pare-brise 3.

Le joint 2 comporte une partie 9 recouvrant le bord inférieur 3a du pare-brise 3 qui comporte un évidement 10 de section transversale sensiblement en U.

Les deux ailes 9 et 11 de ce U comportent chacune une lèvre 7 dirigée vers l'aile opposée.

La grille d'auvent 1 comporte sur sa face intérieure 1a un harpon 6 pouvant s'encliqueter entre les deux ailes du joint 2, comme montré sur la figure 2.

Dans l'exemple représenté sur la figure 2, le joint 2 comporte un évidement 12 de section transversale en U qui est chaussé sur le bord inférieur 3a du pare-brise 3.

Cet évidement 12 comprend une aile 5 qui s'étend sur une partie de la face extérieure 3b du pare-brise 3 et une aile 13 qui s'étend sur une partie de la face intérieure 3c du pare-brise 3.

Cette aile 13 est en contact avec une partie 14 de la caisse du véhicule.

L'étanchéité entre l'aile 13 du joint 2 et le pare-brise 3 est réalisée grâce à des lèvres souples 15.

Par ailleurs, l'aile 5 et l'aile 9 du joint 2 comportent des bossages 16, 17, 18 en contact respectivement avec les bords 3a et 3b du pare-brise 3.

Conformément à l'invention, l'extrémité de la partie 5 du joint 2 opposée au bord inférieur 3a du pare-brise 3 comporte une zone amincie flexible 19 sur laquelle s'appuie l'extrémité 4a de la lèvre 4 de la grille d'auvent 1 pour mettre la zone amincie flexible 19 du joint 2 en contact avec la face extérieure 3b du pare-brise 3.

La figure 2 montre que la zone amincie flexible 19 est reliée au reste de la partie 5 du joint 2 par un rétrécissement 20 de la matière pour constituer une charnière.

Ainsi, la zone amincie 19 est mobile par pivotement autour de l'axe de la charnière, entre une première position dans laquelle, avant fixation de la grille d'auvent 1 sur le joint 2, cette zone amincie 19 est libre par rapport à la face extérieure 3b du pare-brise 3 et une seconde position dans laquelle, après fixation de la grille d'auvent 1 sur le joint 2, une partie de l'extrémité de la zone amincie 19 prend appui de façon étanche sur la face extérieure 3b du pare-brise 3.

La première position de la zone amincie 19 est représentée en trait continu sur la figure 2, tandis que la seconde position de cette zone 19 est montrée en trait pointillé.

La figure 2 montre en outre que la face extérieure de la partie 5 du joint 2 comporte à l'arrière de la zone amincie flexible 19 une protubérance 21 sur laquelle peut s'appuyer la face intérieure 4b de la lèvre 4, lorsque la zone amincie 19 est dans la seconde position, c'est-à-dire en appui contre la face extérieure 3b du pare-brise 3.

Ainsi, lorsque la grille d'auvent 1 est montée sur le joint 2, l'harpon 6 de cette grille d'auvent 1 est encliqueté entre les deux lèvres 7 du joint 2 et la lèvre 4 de la grille d'auvent 1 s'appuie contre la zone amincie 19 ce qui fait pivoter celle-ci vers la face extérieure 3b du pare-brise 3.

L'étanchéité entre la lèvre 4 de la grille d'auvent 1 et le pare-brise 3 n'est pas réalisé par contact direct entre l'extrémité de la lèvre 4 et le pare-brise 3, mais par l'intermédiaire de la zone amincie 19 prise en sandwich entre la lèvre 4 et le pare-brise 3 et par contact entre cette lèvre 4 et le bossage 21 de la partie 5 du joint 2.

Ainsi après montage de la grille d'auvent 1, un espace peut subsister entre l'extrémité de la lèvre 4 et la face extérieure 3b du pare-brise 3.

Grâce à l'invention, l'ensemble de la grille d'auvent 1 peut être moulé d'une seule pièce avec la même matière plastique.

Cette matière plastique peut être une matière bon marché, telle que le polypropylène.

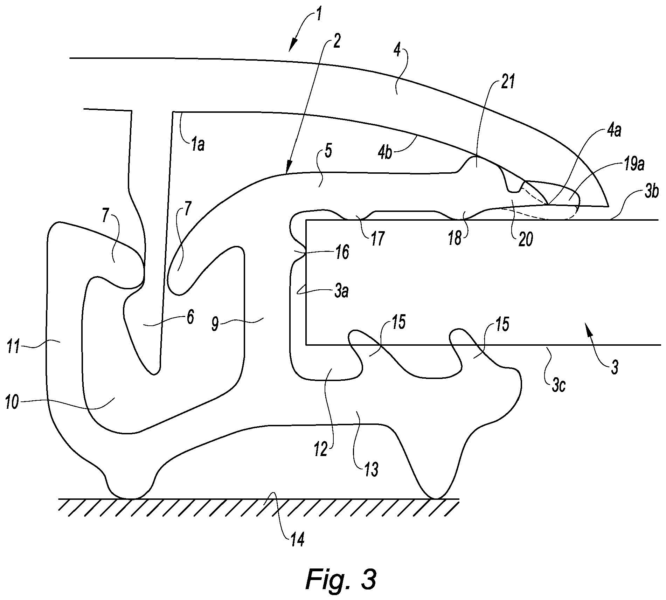

La seconde version de l'invention représentée sur la figure 3 reprend pour l'essentiel la structure de l'ensemble représentée sur la figure 2.

Ainsi, la description des parties de la figure 3 identiques à celles de la figure 2 ne sera pas reprise.

Sur la figure 3, la zone amincie flexible 19a portée par la partie 5 du joint 2 est comme dans le cas de la figure 2 poussée par l'extrémité de la lèvre 4 de la grille d'auvent 1 entre la position en trait continu et la position en trait pointillé dans laquelle elle s'appuie de façon étanche sur le pare-brise 3.

La seule différence entre la zone amincie 19a et la zone amincie 19 est que la zone amincie 19a est plus longue et s'étend partiellement dans le jeu existant entre l'extrémité de la lèvre 4 et le pare-brise 3.

Bien entendu, le joint 2 au lieu d'être simplement chaussé sur le bord inférieur du pare-brise 3 peut être un joint collé sur le pare-brise.

Cependant, dans ce cas, la zone amincie telle que 19 ou 19a portée par l'extrémité de la partie telle que 5 devra rester libre par rapport au pare-brise 3 pour pouvoir être poussée par la lèvre 4 de la grille d'auvent lors de son montage sur le joint.

## Revendications

1. Ensemble comprenant un joint (2) fixé sur le bord inférieur (3a) du pare-brise (3) d'un véhicule automobile et une grille d'auvent (1) fixée sur ce joint (2), cette grille d'auvent (1) comportant une lèvre (4) recouvrant une partie (5) du joint (2) s'étendant sur le bord inférieur (3a) du pare-brise (3) et une partie de la face extérieure (3b) du pare-brise (3), l'extrémité de ladite partie (5) du joint (2) opposée au bord inférieur (3a) du pare-brise (3) comportant une zone amincie flexible (19, 19a) sur laquelle s'appuie l'extrémité (4a) de la lèvre (4) de la grille d'auvent (1) pour mettre ladite zone amincie flexible (19, 19a) dudit joint (2) en contact avec la face extérieure (3b) du pare-brise (3), ladite zone amincie flexible (19, 19a) étant reliée au reste dudit joint (2) par un rétrécissement (20) de la matière pour constituer une charnière, lui permettant d'être mobile par pivotement autour de l'axe de la charnière, entre une première position dans laquelle, avant fixation de la grille d'auvent (1) sur ledit joint (2) cette zone amincie (19, 19a) est libre par rapport à la face extérieure du pare-brise (3) et une seconde position dans laquelle, après fixation de la grille d'auvent (1) sur ledit joint (2), une partie de l'extrémité de la zone amincie (19, 19a) prend appui de façon étanche sur la face extérieure du pare-brise (3), **caractérisé en ce que** la face extérieure de ladite partie (5) du joint (2) comporte à l'arrière de ladite zone amincie flexible (19, 19a) une protubérance (21) sur laquelle peut s'appuyer la face intérieure (4b) de ladite lèvre (4), lorsque ladite zone amincie (19, 19a) est dans ladite seconde position.

2. Ensemble selon la revendication 1, **caractérisé en ce que** l'ensemble de la grille d'auvent (1) est moulé d'une seule pièce avec la même matière plastique.

3. Ensemble selon la revendications 1 ou 2, **caractérisé en ce que** le joint (2) comporte une partie (9) recouvrant le bord inférieur (3a) du pare-brise (3) et comportant un évidement (10) de section transversale sensiblement en U, les deux ailes (9, 11) de cet évidement comportant chacune une lèvre (7) dirigée vers l'aile opposée et la grille d'auvent (1) comporte sur sa face intérieure (1a) un harpon (6) pouvant s'encliqueter entre les deux ailes (9, 11) du joint (2).

4. Ensemble selon l'une des revendications 1 à 3, **caractérisé en ce que** le joint (2) comporte un évidement (12) de section transversale en U qui est chaussé sur le bord inférieur (3a) du pare-brise (3), l'aile de cet évidement (12) s'étendant sur une partie de la face extérieure (3b) du pare-brise (3) constituant ladite partie (5) du joint (2) comportant ladite zone amincie flexible (19, 19a).

5. Ensemble selon l'une des revendications 1 à 3, **caractérisé en ce que** le joint est collé au pare-brise (3).

6. Véhicule automobile équipé d'un ensemble joint inférieur (2) de pare-brise (3) et d'une grille d'auvent (1) selon l'une des revendications 1 à 5.

## Patentansprüche

1. Anordnung, die eine Dichtung (2), die auf dem unteren Rand (3a) der Windschutzscheibe (3) eines Kraftfahrzeugs befestigt ist, und ein Windlaufgitter (1), das auf dieser Dichtung (2) befestigt ist, umfasst, wobei dieses Windlaufgitter (1) eine Lippe (4) umfasst, die einen Teil (5) der Dichtung (2), die sich auf dem unteren Rand (3a) der Windschutzscheibe (3) erstreckt, und einen Teil der Außenfläche (3b) der Windschutzscheibe (3) abdeckt, wobei das Ende des Teils (5) der Dichtung (2), das dem unteren Rand (3a) der Windschutzscheibe (3) gegenüber liegt, eine biegsame verschmälerte Zone (19, 19a) umfasst, auf die sich das Ende (4a) der Lippe (4) des Windlaufgitters (1) stützt, um die biegsame verschmälerte Zone (19, 19a) der Dichtung (2) in Berührung mit der Außenfläche (3b) der Windschutzscheibe (3) zu bringen, wobei die biegsame verschmälerte Zone (19, 19a) mit dem Rest der Dichtung (2) durch eine Verjüngung (20) des Materials verbunden ist, um ein Scharnier zu bilden, das es ihr erlaubt, durch Schwenken um die Achse des Scharniers zwischen einer ersten Position, in der vor dem Befestigen des Windlaufgitters (1) auf der Dichtung (2) diese verschmälerte Zone (19, 19a) in Bezug auf die Außenfläche der Windschutzscheibe (3) frei ist, und einer zweiten Position, in der nach dem Befestigen des Windlaufgitters (1) auf der Dichtung (2) ein Teil des Endes der verschmälerten Zone (19, 19a) dicht auf der Außenfläche der Windschutzscheibe (3) aufliegt, beweglich zu sein, **dadurch gekennzeichnet, dass** die Außenfläche des Teils (5) der Dichtung (2) an der Rückseite der biegsamen verschmälerten Zone (19, 19a) einen Vorsprung (21) umfasst, auf den sich die Innenfläche (4b) der Lippe (4) stützen kann, wenn die verschmälerte Zone (19, 19a) in der zweiten Position ist.

2. Anordnung nach Anspruch 1, **dadurch gekennzeichnet, dass** die Einheit des Windlaufgitters (1) aus einem einzigen Stück aus demselben Kunststoff geformt ist.

3. Anordnung nach Anspruch 1 oder 2, **dadurch gekennzeichnet, dass** die Dichtung (2) einen Teil (9) umfasst, der den unteren Rand (3a) der Windschutzscheibe (3) abdeckt und eine Aussparung (10) mit Querschnitt im Wesentlichen in U-Form umfasst, wobei zwei Flügel (9, 11) dieser Aussparung, die jeweils eine Lippe (7) umfassen, die zu dem gegenüberliegenden Flügel gerichtet ist, und das Windlaufgitter (1) auf seiner Innenfläche (1a) einen Fanghaken (6) umfasst, der zwischen den zwei Flügeln (9, 11) der Dichtung (2) einrasten kann.

4. Anordnung nach einem der Ansprüche 1 bis 3, **dadurch gekennzeichnet, dass** die Dichtung (2) eine Aussparung (12) mit Querschnitt in U-Form umfasst, die auf dem unteren Rand (3a) der Windschutzscheibe (3) sitzt, wobei sich der Flügel dieser Aussparung (12) auf einem Teil der Außenfläche (3b) der Windschutzscheibe (3) erstreckt, der den Teil (5) der Dichtung (2), der die biegsame verschmälerte Zone (19, 19a) umfasst, bildet.

5. Anordnung nach einem der Ansprüche 1 bis 3, **dadurch gekennzeichnet, dass** die Dichtung auf die Windschutzscheibe (3) geklebt ist.

6. Kraftfahrzeug, das mit einer Anordnung einer unteren Dichtung (2) einer Windschutzscheibe (3) und einem Windlaufgitter (1) nach einem der Ansprüche 1 bis 5 ausgestattet ist.

## Claims

1. An assembly including a seal (2) fixed to the lower edge (3a) of the windscreen (3) of a motor vehicle and a scuttle (1) fixed to this seal (2), this scuttle (1) comprising a lip (4) covering a portion (5) of the seal (2) extending along the lower edge (3a) of the windscreen (3) and a portion of the exterior face (3b) of the windscreen (3), the end of said portion (5) of the seal (2) opposite to the lower edge (3a) of the windscreen (3) comprising a flexible thinned region (19, 19a) on which the end (4a) of the lip (4) of the scuttle (1) rests in order to bring said flexible thinned region (19, 19a) of said seal (2) into contact with the exterior face (3b) of the windscreen (3), said flexible thinned region (19, 19a) being connected to the remainder of said seal (2) by a narrowing (20) of the material so as to constitute a hinge, permitting it to be movable by pivoting about the axis of the hinge, between a first position in which, before fixing of the scuttle (1) on said seal (2), this thinned region (19, 19a) is free with respect to the exterior face of the windscreen (3), and a second position in which, after fixing of the scuttle (1) on said seal (2), a portion of the end of the thinned region (19, 19a) rests in a sealed manner on the exterior face of the windscreen (3), **characterized in that** the exterior face of said portion (5) of the seal (2) comprises at the rear of said flexible thinned region (19, 19a) a protuberance (21) on which the interior face (4b) of said lip (4) can rest, when said thinned region (19, 19a) is in said second position.

2. The assembly according to claim 1, **characterized in that** the assembly of the scuttle (1) is moulded in a single piece with the same plastic material.

3. The assembly according to claim 1 or 2, **characterized in that** that seal (2) comprises a portion (9) covering the lower edge (3a) of the windscreen (3) and comprising a recess (10) of substantially U-shaped cross-section, the two wings (9, 11) of this recess each comprising a lip (7) directed towards the opposite wing and the scuttle (1) comprises on its interior face (1a) a harpoon (6) able to snap between the two wings (9, 11) of the seal (2).

4. The assembly according to one of claims 1 to 3, **characterized in that** the seal (2) comprises a recess (12) of U-shaped cross-section, which is fitted on the lower edge (3a) of the windscreen (3), the wing of this recess (12) extending along a portion of the exterior face (3b) of the windscreen (3) constituting said portion (5) of the seal (2) comprising said flexible thinned region (19, 19a).

5. The assembly according to one of claims 1 to 3, **characterized in that** the seal is bonded to the windscreen (3).

6. A motor vehicle equipped with a lower seal assembly (2) of a windscreen (3) and a scuttle (1) according to one of claims 1 to 5.
